# EUROPEAN PATENT APPLICATION

(11) **EP 4 637 222 A1**
(43) Date of publication of application: **22.10.2025**
(21) Application number: 23931836.3
(22) Date of filing: 13.12.2023
(51) Int. Cl.: H04W 52/02

(54) **SIGNAL MONITORING METHOD, SIGNAL SENDING METHOD, COMMUNICATION NODE, AND STORAGE MEDIUM**

(30) Priority: 04.04.2023 CN 202310352711
(71) Applicant: ZTE Corporation, Shenzhen, Guangdong 518057 (CN)
(72) Inventor: YANG, Weiwei, Shenzhen, Guangdong 518057 (CN); DAI, Bo, Shenzhen, Guangdong 518057 (CN); LIU, Kun, Shenzhen, Guangdong 518057 (CN); HU, Youjun, Shenzhen, Guangdong 518057 (CN); CHEN, Mengzhu, Shenzhen, Guangdong 518057 (CN)
(74) Representative: Aipex B.V.
(86) International application number: PCT/CN2023/138343
(87) International publication number: WO 2024/207791

(57) **Abstract**

Provided are a signal monitoring method, a signal sending method, a communication node, and a storage medium. The signal monitoring method includes determining a monitoring space and monitoring a wake-up signal in the monitoring space.

## Description

### TECHNICAL FIELD

This application relates to the field of communication technology, for example, to a signal monitoring method, a signal sending method, a communication node, and a storage medium.

### BACKGROUND

With the continuous development of wireless communication technology, high-speed and low-latency wireless communication relies on efficient network resource management and allocation between user equipment and access network equipment. Next-generation wireless communication networks are expected to provide high-speed, low-latency, and ultra-reliable communication capabilities to meet the demands of various industries and users. On this basis, to meet the requirements for battery life, it is considered to introduce an ultra-low power wake-up mechanism for user equipment. In this mechanism, the user equipment uses a separate receiver to receive a low-power wake-up signal. The low-power wake-up signal activates the main receiver for data transmission. When the user equipment does not detect the low-power wake-up signal, the main receiver remains in a deep sleep state, thereby reducing the power consumption of the user equipment. However, there is no clear solution for how the user equipment receives the low-power wake-up signal.

### SUMMARY

Embodiments of this application provide a signal monitoring method applied to a first communication node. The method includes the following:

A monitoring space is determined. A wake-up signal is monitored in the monitoring space.

Embodiments of this application provide a signal sending method applied to a second communication node. The method includes the following:

A monitoring space is determined. A wake-up signal corresponding to a first communication node is sent in the monitoring space.

Embodiments of this application provide a first communication node. The first communication node includes a processor that, when executing a computer program, implements the signal monitoring method of any of the embodiments described above.

Embodiments of this application provide a second communication node. The second communication node includes a processor that, when executing a computer program, implements the signal sending method of any of the embodiments described above.

Embodiments of this application also provide a computer-readable storage medium. The computer-readable storage medium stores a computer program that, when executed by a processor, implements the signal monitoring method or the signal sending method of any of the embodiments described above.

### BRIEF DESCRIPTION OF DRAWINGS

FIG. 1 is a diagram illustrating the networking of a wireless communication system according to an embodiment.
FIG. 2 is a flowchart of a signal monitoring method according to an embodiment.
FIG. 3 is a flowchart of another signal monitoring method according to an embodiment.
FIG. 4A is a diagram of a monitoring space according to an embodiment.
FIG. 4B is a diagram of a monitoring space according to another embodiment.
FIG. 4C is a diagram of a monitoring space according to another embodiment.
FIG. 4D is a diagram of a monitoring space according to another embodiment.
FIG. 4E is a diagram of a monitoring space according to another embodiment.
FIG. 4F is a diagram of a monitoring space according to another embodiment.
FIG. 4G is a diagram of a monitoring space according to another embodiment.
FIG. 4H is a diagram of a monitoring space according to another embodiment.
FIG. 4I is a diagram of a monitoring space according to another embodiment.
FIG. 4J is a diagram of a monitoring space according to another embodiment.
FIG. 5 is a flowchart of another signal monitoring method according to an embodiment.
FIG. 6A is a diagram of a monitoring space according to an embodiment.
FIG. 6B is a diagram of a monitoring space according to another embodiment.
FIG. 6C is a diagram of a monitoring space according to another embodiment.
FIG. 6D is a diagram of a monitoring space according to another embodiment.
FIG. 6E is a diagram of a monitoring space according to another embodiment.
FIG. 6F is a diagram of a monitoring space according to another embodiment.
FIG. 6G is a diagram of a monitoring space according to another embodiment.
FIG. 7 is a flowchart of a signal sending method according to an embodiment.
FIG. 8 is a flowchart of another signal sending method according to an embodiment.
FIG. 9 is a flowchart of another signal sending method according to an embodiment.
FIG. 10 is a diagram illustrating the structure of a signal monitoring apparatus according to an embodiment.
FIG. 11 is a diagram illustrating the structure of a signal sending apparatus according to an embodiment.
FIG. 12 is a diagram illustrating the structure of a terminal according to an embodiment.
FIG. 13 is a diagram illustrating the structure of a base station according to an embodiment.

### DETAILED DESCRIPTION

It should be understood that the embodiments described herein are only intended to explain this application. Embodiments of this application are described hereinafter in detail in conjunction with drawings.

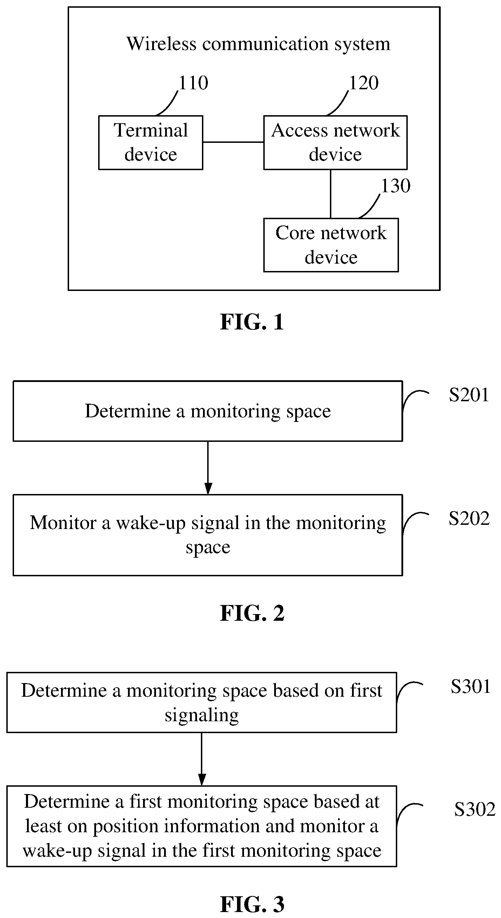

The signal monitoring method and signal sending method provided by this application may be applied to various types of wireless communication systems, such as a Long-Term Evolution (LTE) system, a 4th-generation (4G) mobile communication technology system, a 5th-generation (5G) mobile communication technology system, a LTE and 5G hybrid architecture system, a 5G New Radio (NR) system, and a new communication system emerging in future communication development, for example, a 6th-generation (6G) mobile communication technology system. FIG. 1 is a diagram illustrating the networking of a wireless communication system according to an embodiment. As shown in FIG. 1, the wireless communication system includes a terminal device 110, an access network device 120, and a core network device 130.

The terminal device 110 may be a device having radio transceiving functions. The device may be deployed on land (such as being indoor or outdoor, handled, wearable, or vehicle-mounted); may be deployed on water (such as in ships); and may also be deployed in the air (such as in airplanes, balloons, and satellites). Examples of some terminal devices 110 are as follows: a passive terminal, user equipment (UE), a mobile phone, a mobile station, a tablet computer, a notebook computer, an ultra-mobile personal computer (UMPC), a handheld computer, a netbook, a personal digital assistant (PDA), and other user equipment that can be networked; a virtual reality (VR) terminal, an augmented reality (AR) terminal, a wireless terminal in industrial control, a wireless terminal in self-driving, a wireless terminal in remote medical, a wireless terminal in a smart grid, a wireless terminal in transportation safety, a wireless terminal in a smart city, and a wireless terminal in a smart home; an Internet of Things node in the Internet of Things; an invehicle communication apparatus in the Internet of Vehicles; an entertainment and game device or system; or a global positioning system device. The embodiments of this application do not limit the technology or form of the terminal device 110. Additionally, the terminal device 110 may be referred to as a terminal.

The access network device 120 is an access device through which the terminal device 110 wirelessly accesses the wireless communication system. The access network device 120 may be a reader/writer, a base station, an evolved base station (evolved NodeB, eNB, or eNodeB) in Long Term Evolution Advanced (LTE-A), a transmission reception point (TRP), a base station in the 5G mobile communication system, a next-generation base station (next generation NodeB or gNB), a base station in a future mobile communication system, or an access node in a Wireless Fidelity (Wi-Fi) system. The base station may include various macro base stations, micro base stations, home base stations, remote radio units, routers, Wi-Fi devices, or network-side devices such as primary cells and secondary cells, or location management function (LMF) devices. The access network device 120 may also be a module or unit that performs part of functions of the base station, for example, a central unit (CU) or a distributed unit (DU). The embodiments of this application do not limit the technology or form of the access network device 120. Additionally, the access network device 120 may be referred to as a base station.

The core network device 130 may include an access and mobility management network element and a session management network element. Illustratively, the terminal device 110 may access the core network through the access network device 120, thereby enabling data transmission.

In the embodiments of this application, a signal monitoring method, a signal sending method, a communication node, and a storage medium that are applicable to the preceding wireless communication system are provided. A signal monitoring mechanism is proposed to perform data transmission upon detecting a wake-up signal and to remain in a deep sleep state when no wake-up signal is detected, thereby reducing the power consumption of the terminal device.

The wake-up signal monitoring method, signal sending method, communication node, and technical effects thereof are described below.

FIG. 2 is a flowchart of a signal monitoring method according to an embodiment. As shown in FIG. 2, the method provided by this embodiment is applicable to a first communication node. In this example, the first communication node (also referred to as the first communication node device) may be a terminal device, such as a UE. The method includes S201 and S202.

In S201, a monitoring space is determined.

In this embodiment, the monitoring space may be determined by at least one of the following methods: determining the monitoring space based on first signaling, determining the monitoring space based on information corresponding to the first communication node, determining the monitoring space based on a predefined rule, or determining the monitoring space based on dedicated signaling of the first communication node. Subsequent embodiments will elaborate on how to determine the monitoring space.

In S202, a wake-up signal is monitored in the monitoring space.

After the monitoring space is determined, in this embodiment, the wake-up signal may be monitored in the monitoring space.

In this embodiment, the wake-up signal may be monitored only in the monitoring space and not in other locations.

In an implementation, the first communication node performs data transmission after detecting the wake-up signal; when no wake-up signal is detected, it remains in a deep sleep state.

Illustratively, the wake-up signal in this embodiment may be a Low Power Wake-Up Signal (LP-WUS).

In the signal monitoring method provided by this embodiment, a monitoring space is determined, and a wake-up signal is monitored in the monitoring space, achieving a signal monitoring mechanism. In this manner, the first communication node performs data transmission upon detecting the wake-up signal and remains in a deep sleep state when no wake-up signal is detected, thereby reducing the power consumption of the first communication node.

FIG. 3 is a flowchart of another signal monitoring method according to an embodiment. This embodiment elaborates on how to determine the monitoring space and how to monitor the wake-up signal in the monitoring space based on the embodiment shown in FIG. 2. As shown in FIG. 3, the signal monitoring method provided by this embodiment includes S301 and S302.

In S301, a monitoring space is determined based on first signaling.

The first signaling includes at least one of the following: radio resource control (RRC) signaling or system information block (SIB) signaling.

In an implementation, the first signaling indicates at least one of the following information: a periodicity corresponding to the monitoring space, an offset corresponding to the monitoring space, a duration corresponding to the monitoring space, or a frequency domain position corresponding to the monitoring space.

In an implementation, the first signaling includes {periodicity, offset, duration} corresponding to the monitoring space. An example is as follows:

Monitoring space = {periodicity: {x ms/slot}, offset: {y ms/slot}, duration: {s ms/slot} or {z%}}.

x, y, s, and z are positive numbers greater than or equal to 0. z% represents the proportion of the duration in the entire periodicity.

In another implementation, the first signaling includes {periodicity, offset, duration, frequency domain position} corresponding to the monitoring space. An example is as follows:

Monitoring space = {periodicity: {x ms/slot}, offset: {y ms/slot}, duration: {s ms/slot} or {z%}, frequency domain position: {q} or {Q RB to R RB} or {T RB}}.

x, y, s, z, q, Q, R, and T are positive numbers greater than or equal to 0.

The frequency domain position may be an index q corresponding to a predefined frequency domain position, a range of resource blocks (RBs) from Q to R, or an RB index T corresponding to the starting position.

In S302, a first monitoring space is determined based at least on position information, and a wake-up signal is monitored in the first monitoring space.

The first monitoring space includes one or more monitoring positions within the monitoring space.

In an implementation, the first communication node monitors a synchronization signal in the monitoring space.

In an implementation, the synchronization signal in this embodiment may be a Low Power Synchronization Signal (LP-SS).

In an implementation, the position information includes at least one of the following: an index of a radio frame/slot corresponding to the first monitoring space, an index of a starting radio frame/slot corresponding to the first monitoring space, an index of an ending radio frame/slot corresponding to the first monitoring space, an index of a monitoring position corresponding to the first monitoring space, the number of monitoring positions included in the first monitoring space, the interval between monitoring positions included in the first monitoring space, offset information corresponding to the first monitoring space, a group index corresponding to the first communication node, the total number of groups corresponding to the wake-up signal, or a Paging Occasion (PO)/RACH Occasion (RO) corresponding to the first communication node.

In an implementation, the position information is determined by at least one of the following: SIB signaling, RRC signaling, or a preset value.

The following examples illustrate the preceding implementation process:

### Example 3.1

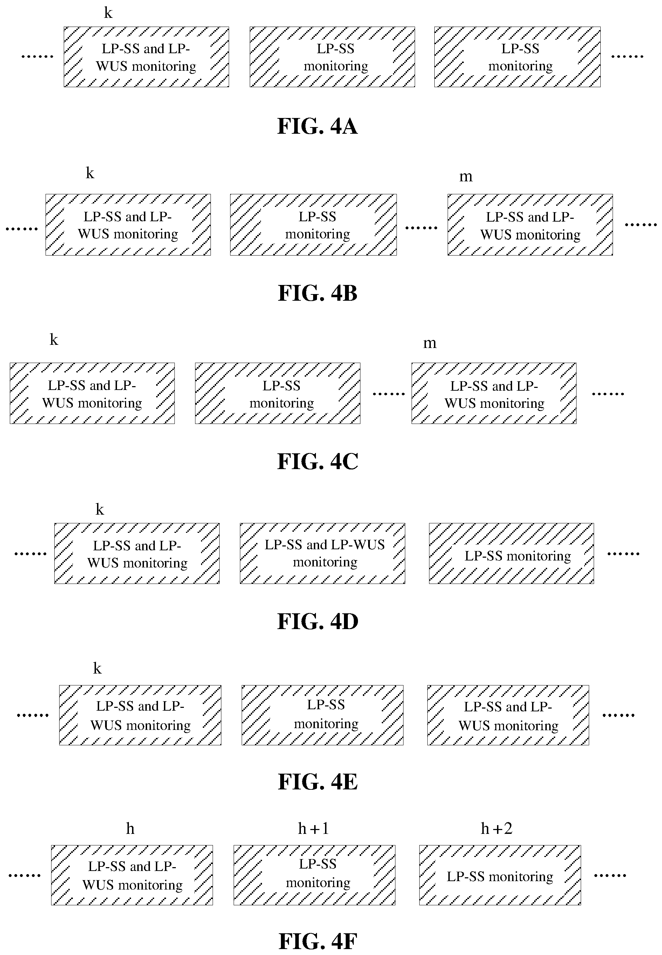

FIG. 4A is a diagram of a monitoring space according to an embodiment. As shown in FIG. 4A, it is assumed that the first communication node determines the monitoring space based on first signaling, as shown in the area filled with diagonal stripes in the figure. The first signaling may be SIB signaling and/or RRC signaling. It is assumed that the radio frame index corresponding to the first monitoring space is determined to be k based on first dedicated signaling. The first dedicated signaling may be SIB signaling and/or RRC signaling.

In an implementation, the first communication node monitors the LP-SS in the monitoring space.

Since the first dedicated signaling configures the radio frame index corresponding to the first monitoring space as k, the first communication node determines that the monitoring positions within the radio frame k form the first monitoring space and monitors the LP-WUS in the first monitoring space. Alternatively, the first communication node determines that the monitoring positions including the radio frame k form the first monitoring space and monitors the LP-WUS in the first monitoring space.

### Example 3.2

FIG. 4B is a diagram of a monitoring space according to another embodiment. As shown in FIG. 4B, it is assumed that the first communication node determines the monitoring space based on first signaling, as shown in the area filled with diagonal stripes in the figure. The first signaling may be SIB signaling and/or RRC signaling. It is assumed that the radio frame indices corresponding to the first monitoring space are determined to be k and m based on first dedicated signaling. The first dedicated signaling may be SIB signaling and/or RRC signaling.

In an implementation, the first communication node monitors the LP-SS in the monitoring space.

Since the first dedicated signaling configures the radio frame indices corresponding to the first monitoring space as k and m, the first communication node determines that the monitoring positions within radio frames k and m form the first monitoring space and monitors the LP-WUS in the first monitoring space. Alternatively, the first communication node determines that the monitoring positions including radio frames k and m form the first monitoring space and monitors the LP-WUS in the first monitoring space.

### Example 3.3

FIG. 4C is a diagram of a monitoring space according to another embodiment. As shown in FIG. 4C, it is assumed that the first communication node determines the monitoring space based on first signaling, as shown in the area filled with diagonal stripes in the figure. The first signaling may be SIB signaling and/or RRC signaling. It is assumed that the first dedicated signaling configures the starting radio frame index of the first monitoring space as k and the ending radio frame index as m. The first dedicated signaling may be SIB signaling and/or RRC signaling.

In an implementation, the first communication node monitors the LP-SS in the monitoring space.

Since the first dedicated signaling configures the starting radio frame index corresponding to the first monitoring space as k and the ending radio frame index as m, the first communication node determines that the monitoring positions from the radio frame k to the radio frame m form the first monitoring space and monitors the LP-WUS in the first monitoring space.

### Example 3.4

FIG. 4D is a diagram of a monitoring space according to another embodiment. As shown in FIG. 4D, it is assumed that the first communication node determines the monitoring space based on first signaling, as shown in the area filled with diagonal stripes in the figure. The first signaling may be SIB signaling and/or RRC signaling. It is assumed that the first dedicated signaling configures the radio frame index corresponding to the first monitoring space as k and the number of consecutive monitoring positions corresponding to the first monitoring space as 2. The first dedicated signaling may be SIB signaling and/or RRC signaling.

In an implementation, the first communication node monitors the LP-SS in the monitoring space.

Since the first dedicated signaling configures the radio frame index corresponding to the first monitoring space as k and the number of consecutive monitoring positions corresponding to the first monitoring space as 2, the first communication node determines that the monitoring position corresponding to the radio frame k and the subsequent 1 monitoring position form the first monitoring space and monitors the LP-WUS in the first monitoring space.

### Example 3.5

It is assumed that the first communication node determines the monitoring space based on first signaling, as shown in the area filled with diagonal stripes in FIG. 4D. The first signaling may be SIB signaling and/or RRC signaling. It is assumed that the first dedicated signaling configures the radio frame index corresponding to the first monitoring space as k. The first dedicated signaling may be SIB signaling and/or RRC signaling. It is predefined that the number of consecutive monitoring positions corresponding to each first communication node is 2.

In an implementation, the first communication node monitors the LP-SS in the monitoring space.

Since the first dedicated signaling configures the radio frame index corresponding to the first monitoring space as k and it is predefined that the number of consecutive monitoring positions corresponding to each first communication node is 2, the first communication node determines that the monitoring position corresponding to the radio frame k and the subsequent 1 monitoring position form the first monitoring space and monitors the LP-WUS in the first monitoring space.

### Example 3.6

FIG. 4E is a diagram of a monitoring space according to another embodiment. As shown in FIG. 4E, it is assumed that the first communication node determines the monitoring space based on first signaling, as shown in the area filled with diagonal stripes in the figure. The first signaling may be SIB signaling and/or RRC signaling. It is assumed that the first dedicated signaling configures the radio frame index corresponding to the first monitoring space as k and the interval between monitoring positions corresponding to the first monitoring space as 1. The first dedicated signaling may be SIB signaling and/or RRC signaling.

In an implementation, the first communication node monitors the LP-SS in the monitoring space.

Since the signaling configures the radio frame index corresponding to the first monitoring space as k and the interval between monitoring positions corresponding to the first monitoring space as 1, the first communication node determines that the monitoring position corresponding to the radio frame k and every subsequent monitoring position with an interval of 1 form the first monitoring space and monitors the LP-WUS in the first monitoring space.

In examples 3.1 to 3.6, the index of the radio frame configured in the first dedicated signaling corresponding to the first monitoring space may also be the index of a slot, the starting radio frame index may also be the starting slot index, and the ending radio frame index may also be the ending slot index.

### Example 3.7

FIG. 4F is a diagram of a monitoring space according to another embodiment. As shown in FIG. 4F, it is assumed that the first communication node determines the monitoring space based on first signaling, as shown in the area filled with diagonal stripes in the figure. The first signaling may be SIB signaling and/or RRC signaling. It is assumed that the first dedicated signaling configures the monitoring position index corresponding to the first monitoring space as h. The first dedicated signaling may be SIB signaling and/or RRC signaling.

In an implementation, the first communication node monitors the LP-SS in the monitoring space.

Since the first dedicated signaling configures the monitoring position index corresponding to the first monitoring space as h, the first communication node determines that the monitoring position corresponding to the monitoring position index h forms the first monitoring space and monitors the LP-WUS in the first monitoring space. The first communication node may determine the index of each monitoring position based on the configuration of the monitoring space.

### Example 3.8

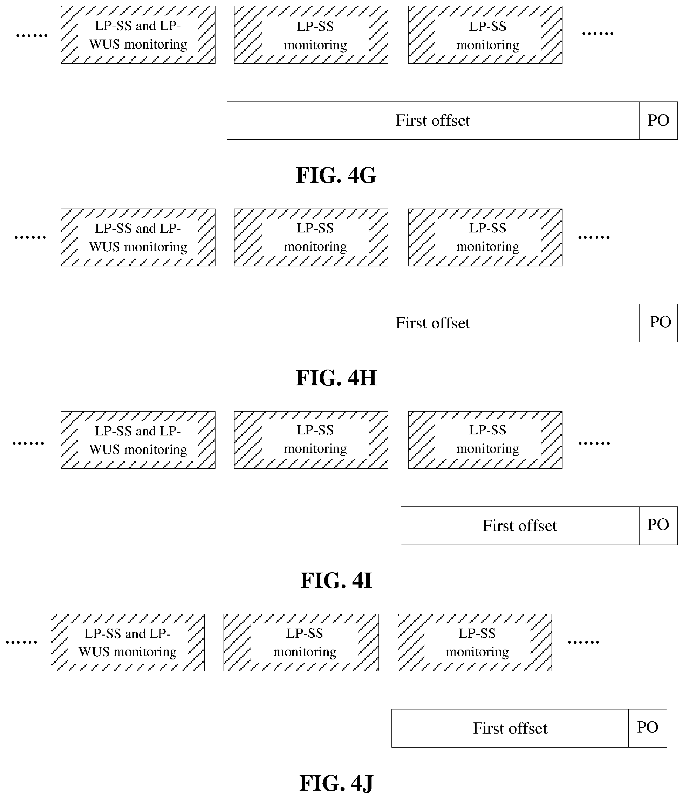

FIG. 4G is a diagram of a monitoring space according to another embodiment. As shown in FIG. 4G, it is assumed that the first communication node determines the monitoring space based on first signaling, as shown in the area filled with diagonal stripes in the figure. The first signaling may be SIB signaling and/or RRC signaling. The first offset is a preset value w.

In an implementation, the first communication node monitors the LP-SS in the monitoring space.

The first communication node determines that the monitoring position closest to and before the PO and the preset value w forms the first monitoring space and monitors the LP-WUS in the first monitoring space.

### Example 3.9

FIG. 4H is a diagram of a monitoring space according to another embodiment. As shown in FIG. 4H, it is assumed that the first communication node determines the monitoring space based on first signaling, as shown in the area filled with diagonal stripes in the figure. The first signaling may be SIB signaling and/or RRC signaling. The first offset is configured by first dedicated signaling. The first dedicated signaling may be SIB signaling and/or RRC signaling.

In an implementation, the first communication node monitors the LP-SS in the monitoring space.

The first communication node determines that the monitoring position closest to and before the PO and the first offset forms the first monitoring space and monitors the LP-WUS in the first monitoring space.

### Example 3.10

FIG. 4I is a diagram of a monitoring space according to another embodiment. As shown in FIG. 4I, it is assumed that the first communication node determines the monitoring space based on first signaling, as shown in the area filled with diagonal stripes in the figure. The first signaling may be SIB signaling and/or RRC signaling. The first offset is configured by first dedicated signaling. The first dedicated signaling may be SIB signaling and/or RRC signaling. The group index corresponding to the first communication node is 2.

In an implementation, the first communication node monitors the LP-SS in the monitoring space.

The first communication node determines that the second monitoring position before the PO and the first offset forms the first monitoring space and monitors the LP-WUS in the first monitoring space.

### Example 3.11

FIG. 4J is a diagram of a monitoring space according to another embodiment. As shown in FIG. 4J, it is assumed that the first communication node determines the monitoring space based on first signaling, as shown in the area filled with diagonal stripes in the figure. The first signaling may be SIB signaling and/or RRC signaling. The first offset is configured by first dedicated signaling. The first dedicated signaling may be SIB signaling and/or RRC signaling. The group index corresponding to the first communication node is 6. The total number of groups corresponding to the wake-up signal is 8.

In an implementation, the first communication node monitors the LP-SS in the monitoring space.

The first communication node determines that the (total number of groups - group index)-th monitoring position before the PO and the first offset, that is, the (8-6)-th before the PO and the first offset, namely, the 2nd monitoring position, forms the first monitoring space and monitors the LP-WUS in the first monitoring space.

In the signal monitoring method provided by this embodiment, a monitoring space is determined based on first signaling, a first monitoring space is determined based at least on position information, and a wake-up signal is monitored in the first monitoring space, thereby achieving the monitoring of the wake-up signal in the first monitoring space in the monitoring space and implementing a signal monitoring mechanism to reduce the power consumption of the first communication node.

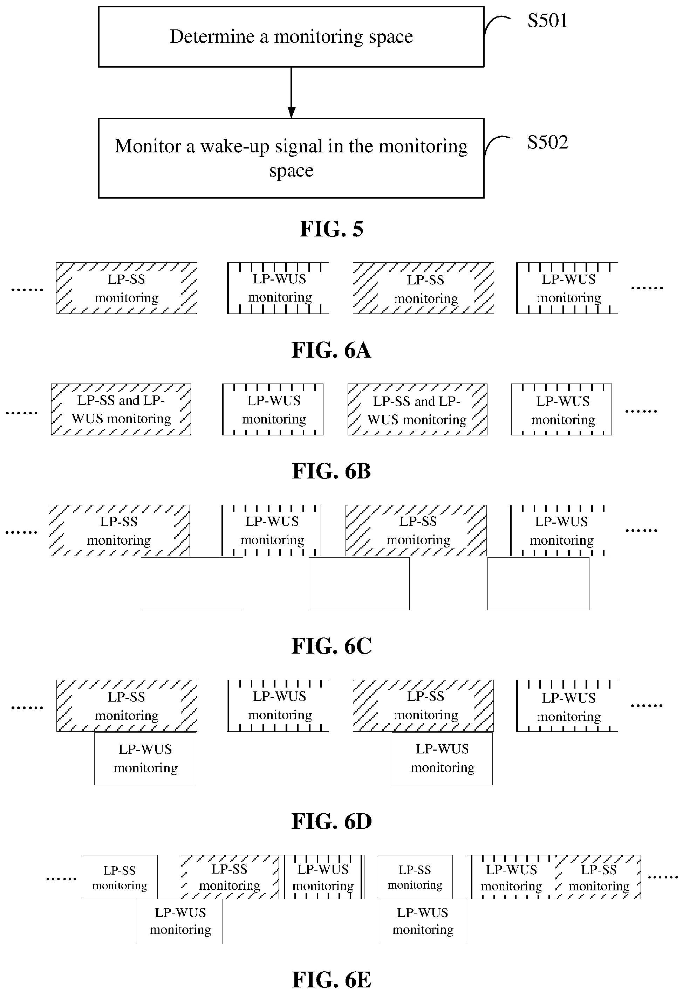

FIG. 5 is a flowchart of another signal monitoring method according to an embodiment. This embodiment elaborates on how to determine the monitoring space based on the embodiment shown in FIG. 2. As shown in FIG. 5, the signal monitoring method provided by this embodiment includes S501 and S502.

In S501, a monitoring space is determined.

In an implementation, S501 includes at least one of the following: determining the monitoring space based at least on a monitoring space index indicated by second dedicated signaling; determining the monitoring space based at least on a first index corresponding to the first communication node; or determining the monitoring space based at least on a predefined rule.

The monitoring space is one or more monitoring spaces in a first monitoring space set and/or a second monitoring space set.

In an implementation, in determining the monitoring space based at least on the monitoring space index indicated by the second dedicated signaling, one or more monitoring spaces in the first monitoring space set and/or the second monitoring space set are determined as the monitoring space based on the monitoring space index indicated by the second dedicated signaling.

In an implementation, in determining the monitoring space based at least on the first index corresponding to the first communication node, one or more monitoring spaces in the first monitoring space set and/or the second monitoring space set are determined as the monitoring space based on the relationship between the first index and the monitoring space and the first index corresponding to the first communication node.

In an implementation, the first index includes at least one of the following: a group index corresponding to the first communication node, an index of the first communication node, a cell index, or an index configured by signaling.

In an implementation, the relationship between the first index and the monitoring space is determined by at least one of the following: pre-definition or signaling configuration.

In an implementation, the predefined rule is that all monitoring spaces in the second monitoring space set are the monitoring space.

In an implementation, the first monitoring space set/the second monitoring space set includes one or more monitoring spaces.

In an implementation, the first monitoring space set/the second monitoring space set is determined based on second signaling/third signaling. The second signaling/third signaling indicates at least one of the following information: a monitoring space index, a periodicity corresponding to the monitoring space, an offset corresponding to the monitoring space, a duration corresponding to the monitoring space, or a frequency domain position corresponding to the monitoring space.

The determination of the first monitoring space set/the second monitoring space set based on second signaling/third signaling may include the following: The first monitoring space set is determined based on second signaling, and the second monitoring space set is determined based on third signaling.

In another implementation, the first monitoring space set/the second monitoring space set is determined based on a monitoring space set index indicated by fourth signaling, where the relationship between the monitoring space set index and a monitoring space set is predefined, and the monitoring space set includes one or more monitoring spaces.

In S502, a wake-up signal is monitored in the monitoring space.

In this embodiment, the first communication node monitors a synchronization signal in the monitoring space of the first monitoring space set.

The following examples illustrate the preceding process:

### Example 5.1

FIG. 6A is a diagram of a monitoring space according to an embodiment. As shown in FIG. 6A, it is assumed that the first communication node determines M monitoring spaces in the first monitoring space set (M = 1 in the figure, diagonally shaded area) based on second signaling and N monitoring spaces in the second monitoring space set (N = 1 in the figure, vertically shaded area) based on third signaling. It is assumed that the second dedicated signaling received by the first communication node indicates that the monitoring space index corresponding to the LP-WUS is 1. The second signaling, third signaling, and second dedicated signaling may be SIB signaling and/or RRC signaling.

The first communication node monitors the LP-SS in the first monitoring space set and monitors the LP-WUS in the monitoring space with a monitoring space index of 1 in the second monitoring space set.

In an implementation, the second signaling includes a monitoring space index, periodicity, offset, duration, and frequency domain position corresponding to one monitoring space in the first monitoring space set. An example is as follows:

```
First monitoring space set = {
        Monitoring space index: 0
        Periodicity: {x0 ms/slot}
        Offset: {y0 ms/slot}
        Duration: {s0 ms/slot} or {z0%}
        Frequency domain position: {q0} or {Q0 to R0} or {T0}
        }
```

In an implementation, the third signaling includes a monitoring space index, periodicity, offset, duration, and frequency domain position corresponding to one monitoring space in the second monitoring space set. An example is as follows:

```
Second monitoring space set =
        {
        Monitoring space index: 1
        Periodicity: {x1 ms/slot}
        Offset: {y1 ms/slot}
        Duration: {s1 ms/slot} or {z1%}
        Frequency domain position: {q1} or {Q1 to R1} or {T1}
        }
```

x0, x1, y0, y1, s0, s1, z0, z1, q0, q1, Q0, Q1, R0, R1, T0, and T1 are positive numbers greater than or equal to 0.

### Example 5.2

FIG. 6B is a diagram of a monitoring space according to another embodiment. As shown in FIG. 6B, it is assumed that the first communication node determines M monitoring spaces in the first monitoring space set (M = 1 in the figure, diagonally shaded area) based on second signaling and N monitoring spaces in the second monitoring space set (N = 1 in the figure, vertically shaded area) based on third signaling. The second communication node and the first communication node predefine that one monitoring space index corresponding to the first monitoring space set is 0, and one monitoring space index corresponding to one monitoring space of the second monitoring space set is 1. It is assumed that the second dedicated signaling received by the first communication node indicates that the monitoring space indices corresponding to the LP-WUS are 0 and 1. The second signaling, third signaling, and second dedicated signaling may be SIB signaling and/or RRC signaling.

The first communication node monitors the LP-SS in the first monitoring space set and monitors the LP-WUS in the monitoring space with a monitoring space index of 0 in the first monitoring space set and the monitoring space with a monitoring space index of 1 in the second monitoring space set.

In an implementation, the second signaling includes the periodicity, offset, and duration corresponding to one monitoring space in the first monitoring space set. An example is as follows:

```
First monitoring space set =
        {
        Periodicity: {x0 ms/slot}
        Offset: {y0 ms/slot}
        Duration: {s0 ms/slot}
        }
```

The third signaling includes the periodicity, offset, and duration corresponding to one monitoring space in the second monitoring space set. An example is as follows:

```
Second monitoring space set =
        {
        Periodicity: {x1 ms/slot}
        Offset: {y1 ms/slot}
        Duration: {s1 ms/slot}
        }
```

x0, x1, y0, y1, s0, and s1 are positive numbers greater than or equal to 0.

### Example 5.3

FIG. 6C is a diagram of a monitoring space according to another embodiment. As shown in FIG. 6C, it is assumed that the first communication node determines M monitoring spaces in the first monitoring space set (M = 1 in the figure, diagonally shaded area) based on second signaling and N monitoring spaces in the second monitoring space set (N = 2 in the figure, black vertically shaded and gray vertically shaded areas) based on third signaling. It is assumed that the first index corresponding to the first communication node is 2. The second signaling and third signaling may be SIB signaling and/or RRC signaling.

The first communication node monitors the LP-SS in the first monitoring space set. Since the first index corresponding to the first communication node is 2, the first communication node monitors the LP-WUS in the monitoring space with a monitoring space index of 2 in the second monitoring space set.

The first communication node determines the corresponding monitoring space index based on the first index, which may have a one-to-one correspondence or a predefined relationship between the first index and the monitoring space index, and the first communication node determines the monitoring space index based on the first index and the correspondence. The first index may be the group index corresponding to the first communication node, an index specific to the first communication node obtained by the first communication node through signaling, or a cell index corresponding to the first communication node.

The second signaling includes a monitoring space index, periodicity, offset, duration, and frequency domain position corresponding to one monitoring space in the first monitoring space set. An example is as follows:

```
First monitoring space set =
        {
        Monitoring space index: 0
        Periodicity: {x0 ms}
        Offset: {y0 ms}
        Duration: {z0%}
        Frequency domain position: {T0}
        }
```

The third signaling includes monitoring space indices, periodicity, offset, and duration corresponding to two monitoring spaces in the second monitoring space set. An example is as follows:
S

```
econd monitoring space set =
        {
        Monitoring space 1
        Monitoring space index: 1
        Periodicity: {x1 ms}
        Offset: {y1 ms}
        Duration: {s1 ms}
        Frequency domain position: {T1}
        Monitoring space 2
        Monitoring space index: 2
        Periodicity: {x2 ms}
        Offset: {y2 ms}
        Duration: {s2 ms}
        Frequency domain position: {T2}
        }
```

x0, x1, x2, y0, y1, y2, s1, s2, z0, T0, T1, and T2 are positive numbers greater than or equal to 0.

### Example 5.4

FIG. 6D is a diagram of a monitoring space according to another embodiment. As shown in FIG. 6D, it is assumed that the first communication node determines M monitoring spaces in the first monitoring space set (M = 1 in the figure, diagonally shaded area) based on second signaling and N monitoring spaces in the second monitoring space set (N = 2 in the figure, black vertically shaded and gray vertically shaded areas) based on third signaling. The second signaling and third signaling may be SIB signaling and/or RRC signaling.

The first communication node monitors the LP-SS in the first monitoring space set and monitors the LP-WUS in the two monitoring spaces in the second monitoring space set. In this example, the first communication node determines the monitoring space based on a predefined rule. Illustratively, the predefined rule is that all monitoring spaces in the second monitoring space set are the monitoring space.

In an implementation, the second signaling includes the periodicity, offset, duration, and frequency domain position corresponding to one monitoring space in the first monitoring space set. An example is as follows:

```
First monitoring space set =
        {
        Periodicity: {x0 ms}
        Offset: {y0 ms}
        Duration: {s0 ms}
        Frequency domain position: {q0}
        }
```

The third signaling includes the periodicity, offset, duration, and frequency domain positions corresponding to two monitoring spaces in the second monitoring space set. An example is as follows:

```
Second monitoring space set =
        {
        Monitoring space 1
        Periodicity: {x1 ms}
        Offset: {y1 ms}
        Duration: {s1 ms}
        Frequency domain position: {q1}
        Monitoring space 2
        Periodicity: {x2 ms}
        Offset: {y2 ms}
        Duration: {s2 ms}
        Frequency domain position: {q2}
        }
```

x0, x1, x2, y0, y1, y2, s0, s1, s2, q0, q1, and q2 are positive numbers greater than or equal to 0.

### Example 5.5

FIG. 6E is a diagram of a monitoring space according to another embodiment. As shown in FIG. 6E, it is assumed that the first communication node determines M monitoring spaces in the first monitoring space set (M = 2 in the figure, black diagonally shaded and gray diagonally shaded areas) based on second signaling and N monitoring spaces in the second monitoring space set (N = 2 in the figure, black vertically shaded and gray vertically shaded areas) based on third signaling. The second signaling and third signaling may be SIB signaling and/or RRC signaling.

The first communication node monitors the LP-SS in the first monitoring space set and monitors the LP-WUS in the second monitoring space set.

In an implementation, the second signaling includes the periodicity, offset, and duration corresponding to two monitoring spaces in the first monitoring space set. An example is as follows:

```
First monitoring space set =
        {
        Monitoring space 1
        Periodicity: {x0 ms}
        Offset: {y0 ms}
        Duration: {s0 ms}
        Monitoring space 2
        Periodicity: {x1 ms}
        Offset: {y1 ms}
        Duration: {s1 ms}
        }
```

The third signaling includes the periodicity, offset, and duration corresponding to two monitoring spaces in the second monitoring space set. An example is as follows:

```
Second monitoring space set =
        {
        Monitoring space 1
        Periodicity: {x2 ms}
        Offset: {y2 ms}
        Duration: {s2 ms}
        Monitoring space 2
        Periodicity: {x3 ms}
        Offset: {y3 ms}
        Duration: {s3 ms}
        }
```

x0, x1, x2, x3, y0, y1, y2, y3, s0, s1, s2, and s3 are positive numbers greater than or equal to 0.

### Example 5.6

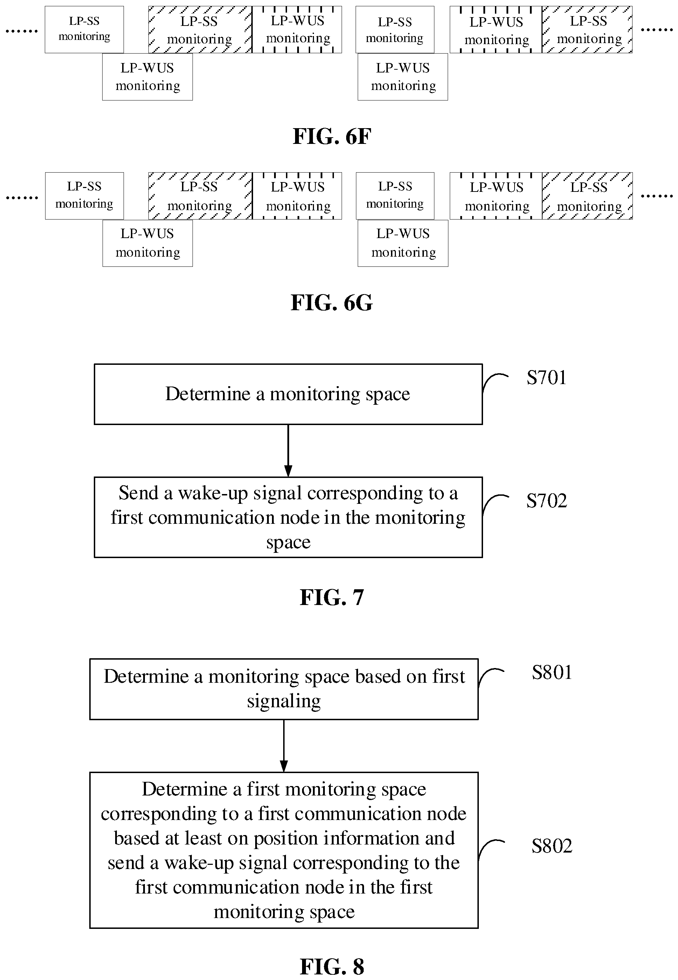

FIG. 6F is a diagram of a monitoring space according to another embodiment. As shown in FIG. 6F, it is assumed that the first communication node determines M monitoring spaces in the first monitoring space set (M = 2 in the figure, black diagonally shaded and gray diagonally shaded areas) based on fourth signaling and N monitoring spaces in the second monitoring space set (N = 2 in the figure, black vertically shaded and gray vertically shaded areas) based on fourth signaling. The fourth signaling may be SIB signaling and/or RRC signaling.

The first communication node monitors the LP-SS in the first monitoring space set and monitors the LP-WUS in the second monitoring space set.

In an implementation, the fourth signaling includes a monitoring space set index corresponding to the first monitoring space set. An example is as follows:
First monitoring space set:
{Monitoring space set index A}

The fourth signaling also includes a monitoring space set index corresponding to the second monitoring space set. An example is as follows:
Second monitoring space set:
{Monitoring space set index B}

The relationship between the monitoring space set index and the monitoring space set may be predefined. An example is as follows:

```
        {Monitoring space set index A
        Monitoring space 1 {monitoring space index, periodicity, offset, duration, frequency
        domain position}
        Monitoring space 2 {monitoring space index, periodicity, offset, duration, frequency
        domain position}
        }
        {Monitoring space set index B
        Monitoring space 1 {monitoring space index, periodicity, offset, duration, frequency
        domain position}
        Monitoring space 2 {monitoring space index, periodicity, offset, duration, frequency
        domain position}
        }
```

### Example 5.7

FIG. 6G is a diagram of a monitoring space according to another embodiment. As shown in FIG. 6G, it is assumed that the first communication node determines M monitoring spaces in the first monitoring space set (M = 2 in the figure, black diagonally shaded and gray diagonally shaded areas) based on second signaling and N monitoring spaces in the second monitoring space set (N = 2 in the figure, black vertically shaded and gray vertically shaded areas) based on third signaling. The second signaling and third signaling may be SIB signaling and/or RRC signaling.

The first communication node monitors the LP-SS in the first monitoring space set and monitors the LP-WUS in the second monitoring space set.

In an implementation, the second signaling includes the periodicity, offset, and duration corresponding to two monitoring spaces in the first monitoring space set. An example is as follows:

```
First monitoring space set =
        {
        Monitoring space 1
        Periodicity: {x0 ms}
        Offset: {y0 ms}
        Duration: {z0 ms}
        Monitoring space 2
        Periodicity: {x1 ms}
        Offset: {y1 ms}
        Duration: {z1 ms}
        }
```

The third signaling includes a monitoring space set index corresponding to the second monitoring space set. An example is as follows:

```
{Monitoring space set index B
        Monitoring space 1 {Periodicity x2 ms, Offset y2 ms, Duration z2 ms, Frequency domain
        position T1}
        Monitoring space 2 {Periodicity x3 ms, Offset y3 ms, Duration z3 ms, Frequency domain
        position T2}
    }
```

x0, x1, x2, x3, y0, y1, y2, y3, z0, z1, z2, z3, T1, and T2 are positive numbers greater than or equal to 0.

In the signal monitoring method provided by this embodiment, a monitoring space is determined, and a wake-up signal is monitored in the monitoring space, achieving a signal monitoring mechanism. In this manner, the first communication node performs data transmission upon detecting the wake-up signal and remains in a deep sleep state when no wake-up signal is detected, thereby reducing the power consumption of the first communication node.

FIG. 7 is a flowchart of a signal sending method according to an embodiment. As shown in FIG. 7, the method provided by this embodiment is applicable to a second communication node. In this embodiment, the second communication node (also referred to as the second communication node device) may be an access network device, such as a base station. The method includes S701 and S702.

In S701, a monitoring space is determined.

In this embodiment, the monitoring space may be determined by at least one of the following methods: determining the monitoring space based on first signaling, determining the monitoring space based on information corresponding to the first communication node, determining the monitoring space based on a predefined rule, or determining the monitoring space based on dedicated signaling of the first communication node. Subsequent embodiments will elaborate on how to determine the monitoring space.

In S702, a wake-up signal corresponding to a first communication node is sent in the monitoring space.

After the monitoring space is determined, in this embodiment, a wake-up signal corresponding to the first communication node may be sent in the monitoring space.

In this embodiment, the wake-up signal corresponding to the first communication node may be sent only in the monitoring space and not in other locations.

Illustratively, the wake-up signal in this embodiment may be an LP-WUS.

In the signal sending method provided by this embodiment, a monitoring space is determined, and a wake-up signal corresponding to the first communication node is sent in the monitoring space, achieving a signal sending mechanism. In this manner, the first communication node performs data transmission upon detecting the wake-up signal and remains in a deep sleep state when no wake-up signal is detected, thereby reducing the power consumption of the first communication node.

FIG. 8 is a flowchart of another signal sending method according to an embodiment. As shown in FIG. 8, this embodiment elaborates on how to determine the monitoring space and how to send the wake-up signal corresponding to the first communication node in the monitoring space based on the embodiment shown in FIG. 7. As shown in FIG. 8, the signal sending method provided by this embodiment includes S801 and S802.

In S801, a monitoring space is determined based on first signaling.

The first signaling includes at least one of the following: RRC signaling or SIB signaling.

In an implementation, the first signaling indicates at least one of the following information: a periodicity corresponding to the monitoring space, an offset corresponding to the monitoring space, a duration corresponding to the monitoring space, or a frequency domain position corresponding to the monitoring space.

In S802, a first monitoring space corresponding to a first communication node is determined based at least on position information, and a wake-up signal corresponding to the first communication node is sent in the first monitoring space.

The first monitoring space includes one or more monitoring positions within the monitoring space.

In an implementation, the position information includes at least one of the following: an index of a radio frame/slot corresponding to the first monitoring space, an index of a starting radio frame/slot corresponding to the first monitoring space, an index of an ending radio frame/slot corresponding to the first monitoring space, an index of a monitoring position corresponding to the first monitoring space, the number of monitoring positions included in the first monitoring space, the interval between monitoring positions included in the first monitoring space, offset information corresponding to the first monitoring space, a group index corresponding to the first communication node, the total number of groups corresponding to the wake-up signal, or a PO/RO corresponding to the first communication node.

In an implementation, the position information is determined by at least one of the following: SIB signaling, RRC signaling, or a preset value.

In an implementation, the signal sending method provided by this embodiment also includes sending a synchronization signal in the monitoring space.

In the signal sending method provided by this embodiment, a monitoring space is determined based on first signaling, a first monitoring space is determined based at least on position information, and a wake-up signal corresponding to the first communication node is sent in the first monitoring space, thereby achieving the sending of the wake-up signal corresponding to the first communication node in the first monitoring space in the monitoring space and implementing a signal sending mechanism to reduce the power consumption of the first communication node.

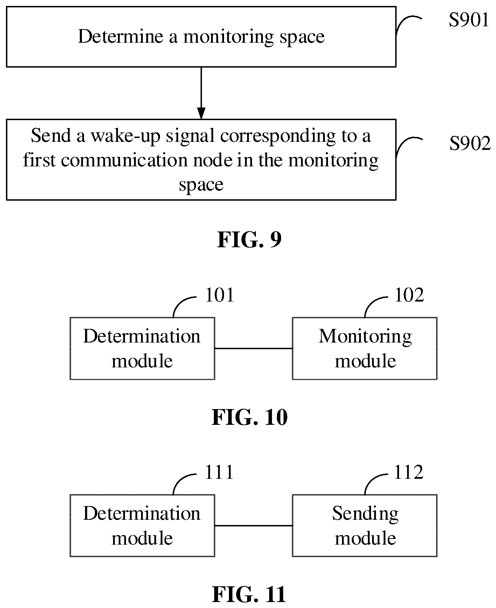

FIG. 9 is a flowchart of another signal sending method according to an embodiment. As shown in FIG. 9, this embodiment elaborates on how to determine the monitoring space based on the embodiment shown in FIG. 7. As shown in FIG. 9, the signal sending method provided by this embodiment includes S901 and S902.

In S901, a monitoring space is determined.

In an implementation, S901 includes at least one of the following: determining one or more monitoring spaces in a first monitoring space set and/or a second monitoring space set as the monitoring space based at least on a monitoring space index indicated by second dedicated signaling; determining one or more monitoring spaces in a first monitoring space set and/or a second monitoring space set as the monitoring space based at least on a first index corresponding to the first communication node; or determining one or more monitoring spaces in a first monitoring space set and/or a second monitoring space set as the monitoring space based at least on a predefined rule.

In an implementation, determining one or more monitoring spaces in the first monitoring space set and/or the second monitoring space set as the monitoring space based at least on the first index corresponding to the first communication node includes determining one or more monitoring spaces in the first monitoring space set and/or the second monitoring space set as the monitoring space based on the relationship between the first index and the monitoring space and the first index corresponding to the first communication node.

In an implementation, the first index includes at least one of the following: a group index corresponding to the first communication node, an index of the first communication node, a cell index, or an index configured by signaling.

In an implementation, the relationship between the first index and the monitoring space is determined by at least one of the following: pre-definition or signaling configuration.

In an implementation, the predefined rule is that all monitoring spaces in the second monitoring space set are the monitoring space.

In an implementation, determining the monitoring space also includes determining the first monitoring space set/the second monitoring space set based on second signaling/third signaling.

The second signaling/third signaling indicates at least one of the following information: a monitoring space index, a periodicity corresponding to the monitoring space, an offset corresponding to the monitoring space, a duration corresponding to the monitoring space, or a frequency domain position corresponding to the monitoring space.

In another implementation, determining the monitoring space also includes determining the first monitoring space set/the second monitoring space set based on a monitoring space set index indicated by fourth signaling and a predefined relationship between the monitoring space set index and a monitoring space set, where the monitoring space set includes one or more monitoring spaces.

In S902, a wake-up signal corresponding to a first communication node is sent in the monitoring space.

In an implementation, the signal sending method provided by this embodiment also includes sending a synchronization signal in the monitoring space of the first monitoring space set.

In the signal sending method provided by this embodiment, a monitoring space is determined, and a wake-up signal corresponding to the first communication node is sent in the monitoring space, achieving a signal sending mechanism. In this manner, the first communication node performs data transmission upon detecting the wake-up signal and remains in a deep sleep state when no wake-up signal is detected, thereby reducing the power consumption of the first communication node.

FIG. 10 is a diagram illustrating the structure of a signal monitoring apparatus according to an embodiment. The apparatus may be configured in a first communication node. As shown in FIG. 10, the signal monitoring apparatus provided by this embodiment includes a determination module 101 and a monitoring module 102.

The determination module 101 is configured to determine a monitoring space.

The monitoring module 102 is configured to monitor a wake-up signal in the monitoring space.

In an embodiment, the determination module 101 is configured to determine the monitoring space based on first signaling. The first signaling includes at least one of the following: RRC signaling or SIB signaling.

In an implementation, the first signaling indicates at least one of the following information: a periodicity corresponding to the monitoring space, an offset corresponding to the monitoring space, a duration corresponding to the monitoring space, or a frequency domain position corresponding to the monitoring space.

In an embodiment, the monitoring module 102 is configured to determine a first monitoring space based at least on position information and monitor the wake-up signal in the first monitoring space. The first monitoring space includes one or more monitoring positions within the monitoring space.

In an implementation, the position information includes at least one of the following: an index of a radio frame/slot corresponding to the first monitoring space, an index of a starting radio frame/slot corresponding to the first monitoring space, an index of an ending radio frame/slot corresponding to the first monitoring space, an index of a monitoring position corresponding to the first monitoring space, the number of monitoring positions included in the first monitoring space, the interval between monitoring positions included in the first monitoring space, offset information corresponding to the first monitoring space, a group index corresponding to the first communication node, the total number of groups corresponding to the wake-up signal, or a PO/RO corresponding to the first communication node.

In an implementation, the position information is determined by at least one of the following: SIB signaling, RRC signaling, or a preset value.

In an implementation, the monitoring module 102 is also configured to monitor a synchronization signal in the monitoring space.

In an embodiment, the determination module 101 is configured to perform at least one of the following: determining the monitoring space based at least on a monitoring space index indicated by second dedicated signaling; determining the monitoring space based at least on a first index corresponding to the first communication node; or determining the monitoring space based at least on a predefined rule; where the monitoring space is one or more monitoring spaces in a first monitoring space set and/or a second monitoring space set.

In an implementation, in determining the monitoring space based at least on the monitoring space index indicated by the second dedicated signaling, the determination module 101 is configured to determine one or more monitoring spaces in the first monitoring space set and/or the second monitoring space set as the monitoring space based on the monitoring space index indicated by the second dedicated signaling.

In an implementation, in determining the monitoring space based at least on the first index corresponding to the first communication node, the determination module 101 is configured to determine one or more monitoring spaces in the first monitoring space set and/or the second monitoring space set as the monitoring space based on the relationship between the first index and the monitoring space and the first index corresponding to the first communication node.

In an implementation, the first index includes at least one of the following: a group index corresponding to the first communication node, an index of the first communication node, a cell index, or an index configured by signaling.

In an implementation, the relationship between the first index and the monitoring space is determined by at least one of the following: pre-definition or signaling configuration.

In an implementation, the predefined rule is that all monitoring spaces in the second monitoring space set are the monitoring space.

In an implementation, the first monitoring space set/the second monitoring space set includes one or more monitoring spaces.

In an implementation, the first monitoring space set/the second monitoring space set is determined based on second signaling/third signaling, where the second signaling/the third signaling indicates at least one of the following information: a monitoring space index, a periodicity corresponding to the monitoring space, an offset corresponding to the monitoring space, a duration corresponding to the monitoring space, or a frequency domain position corresponding to the monitoring space.

In an implementation, the first monitoring space set/the second monitoring space set is determined based on a monitoring space set index indicated by fourth signaling and a predefined relationship between the monitoring space set index and a monitoring space set, where the monitoring space set includes one or more monitoring spaces.

In an implementation, the monitoring module 102 is also configured to monitor a synchronization signal in the monitoring space of the first monitoring space set.

The signal monitoring apparatus provided by this embodiment is configured to implement the signal monitoring method of the embodiments described above. The implementation principles and technical effects of the signal monitoring apparatus provided by this embodiment are similar to those of the preceding embodiments and will not be repeated here.

FIG. 11 is a diagram illustrating the structure of a signal sending apparatus according to an embodiment. The apparatus may be configured in a second communication node. As shown in FIG. 11, the signal monitoring apparatus provided by this embodiment includes a determination module 111 and a sending module 112.

The determination module 111 is configured to determine a monitoring space.

The sending module 112 is configured to send a wake-up signal corresponding to a first communication node in the monitoring space.

In an embodiment, the determination module 111 is configured to determine the monitoring space based on first signaling. The first signaling includes at least one of the following: RRC signaling or SIB signaling.

In an implementation, the first signaling indicates at least one of the following information: a periodicity corresponding to the monitoring space, an offset corresponding to the monitoring space, a duration corresponding to the monitoring space, or a frequency domain position corresponding to the monitoring space.

In an implementation, the sending module 112 is configured to determine a first monitoring space corresponding to the first communication node based at least on position information and send the wake-up signal corresponding to the first communication node in the first monitoring space. The first monitoring space includes one or more monitoring positions within the monitoring space.

In an implementation, the position information includes at least one of the following: an index of a radio frame/slot corresponding to the first monitoring space, an index of a starting radio frame/slot corresponding to the first monitoring space, an index of an ending radio frame/slot corresponding to the first monitoring space, an index of a monitoring position corresponding to the first monitoring space, the number of monitoring positions included in the first monitoring space, the interval between monitoring positions included in the first monitoring space, offset information corresponding to the first monitoring space, a group index corresponding to the first communication node, the total number of groups corresponding to the wake-up signal, or a PO/RO corresponding to the first communication node.

In an implementation, the position information is determined by at least one of the following: SIB signaling, RRC signaling, or a preset value.

In an implementation, the sending module 112 is also configured to send a synchronization signal in the monitoring space.

In another embodiment, the determination module 111 is configured to perform at least one of the following: determining one or more monitoring spaces in a first monitoring space set and/or a second monitoring space set as the monitoring space based at least on a monitoring space index indicated by second dedicated signaling; determining one or more monitoring spaces in a first monitoring space set and/or a second monitoring space set as the monitoring space based at least on a first index corresponding to the first communication node; or determining one or more monitoring spaces in a first monitoring space set and/or a second monitoring space set as the monitoring space based at least on a predefined rule.

In determining one or more monitoring spaces in the first monitoring space set and/or the second monitoring space set as the monitoring space based at least on the first index corresponding to the first communication node, the determination module 111 is configured to determine one or more monitoring spaces in the first monitoring space set and/or the second monitoring space set as the monitoring space based on the relationship between the first index and the monitoring space and the first index corresponding to the first communication node.

In an implementation, the first index includes at least one of the following: a group index corresponding to the first communication node, an index of the first communication node, a cell index, or an index configured by signaling.

In an implementation, the relationship between the first index and the monitoring space is determined by at least one of the following: pre-definition or signaling configuration.

In an implementation, the predefined rule is that all monitoring spaces in the second monitoring space set are the monitoring space.

In an embodiment, the determination module 111 is also configured to determine the first monitoring space set/the second monitoring space set based on second signaling/third signaling. The second signaling/third signaling indicates at least one of the following information: a monitoring space index, a periodicity corresponding to the monitoring space, an offset corresponding to the monitoring space, a duration corresponding to the monitoring space, or a frequency domain position corresponding to the monitoring space.

In an embodiment, the determination module 111 is also configured to determine the first monitoring space set/the second monitoring space set based on a monitoring space set index indicated by fourth signaling and a predefined relationship between the monitoring space set index and a monitoring space set. The monitoring space set includes one or more monitoring spaces.

In an implementation, the sending module 112 is also configured to send a synchronization signal in the monitoring space of the first monitoring space set.

The signal sending apparatus provided by this embodiment is configured to implement the signal sending method of the embodiments described above. The implementation principles and technical effects of the signal sending apparatus provided by this embodiment are similar to those of the preceding embodiments and will not be repeated here.

Embodiments of this application also provide a communication node. The communication node includes a processor, which is configured to, when executing a computer program, perform the method provided in any embodiment of this application. The communication node may be a first communication node or a second communication node. The first communication node includes a processor that, when executing a computer program, is configured to implement the signal monitoring method provided in any embodiment of this application. The second communication node includes a processor that, when executing a computer program, is configured to implement the signal sending method provided in any embodiment of this application. Illustratively, the first communication node may be a terminal device, such as a UE, provided by any embodiment of this application; the second communication node may be an access network device, such as a base station, provided by any embodiment of this application, which is not limited by this application.

Illustratively, the following embodiments provide diagrams illustrating structures of a communication node as a terminal and a base station, respectively:

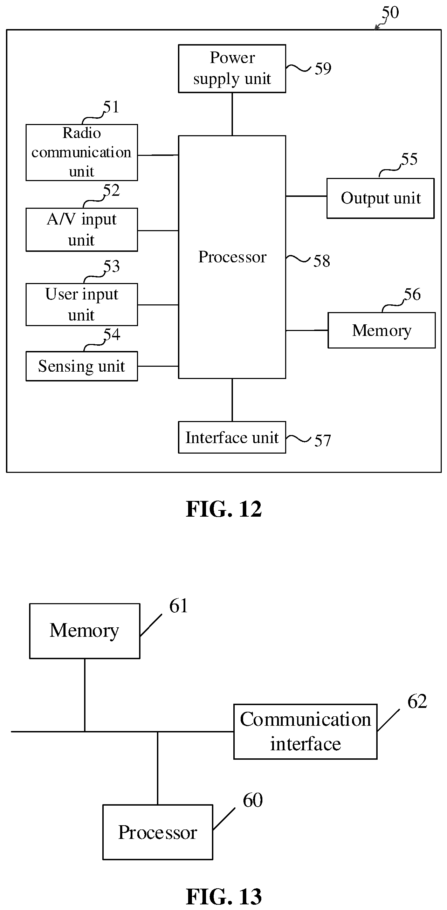

FIG. 12 is a diagram illustrating the structure of a terminal according to an embodiment. The terminal 50 may be implemented in various forms. The terminal 50 in this application may include but is not limited to, mobile terminal devices such as a mobile phone, a smart phone, a notebook computer, a digital broadcast receiver, a personal digital assistant (PDA), a portable device (PAD), a portable multimedia player (PMP), a navigation apparatus, a vehicle-mounted terminal device, a vehicle-mounted display terminal, and a vehicle-mounted electronic rearview mirror and fixed terminal devices such as a digital television (TV) and a desktop computer.

As shown in FIG. 12, a terminal 50 may include a radio communication unit 51, an audio/video (A/V) input unit 52, a user input unit 53, a sensing unit 54, an output unit 55, a memory 56, an interface unit 57, a processor 58, and a power supply unit 59. FIG. 12 shows a terminal 50 including various components, but it should be understood that not all illustrated components are required to be implemented. More or fewer components may be implemented alternatively.

In this embodiment, the radio communication unit 51 allows radio communication between the terminal 50 and a base station or a network. The A/V input unit 52 is configured to receive audio or video signals. The user input unit 53 may generate key input data based on commands input by a user to control various operations of the terminal 50. The sensing unit 54 detects the current state of the terminal 50, the position of the terminal 50, the presence or absence of the user's touch input into the terminal 50, the orientation of the terminal 50, the acceleration or deceleration of the terminal 50, the direction of the acceleration or deceleration, and the like and generates commands or signals for controlling the operations of the terminal 50. The interface unit 57 serves as an interface through which at least one external device can be connected to the terminal 50. The output unit 55 is configured to provide output signals in a visual, audio, and/or tactile manner. The memory 56 may store software programs of processing and control operations executed by the processor 58 and the like or may temporarily store data that has been output or is to be output. The memory 56 may include at least one type of storage medium. Moreover, the terminal 50 may cooperate with a network storage apparatus that implements the storage function of the memory 56 through a network connection. The processor 58 is generally configured to control the overall operation of the terminal 50. Under the control of the processor 58, the power supply unit 59 receives external power or internal power and provides appropriate power required for operating various elements and components.

The processor 58 executes the programs stored in the memory 56 to perform at least one function application and data processing, for example, to implement the method provided by the embodiments of this application.

FIG. 13 is a diagram illustrating the structure of a base station according to an embodiment. As shown in FIG. 13, the base station includes a processor 60, a memory 61, and a communication interface 62. One or more processors 60 may be provided in the base station, and one processor 60 is used as an example in FIG. 13. The processor 60, the memory 61, and the communication interface 62 that are in the base station may be connected through a bus or in other manners. In FIG. 13, the connection through the bus is used as an example. The bus represents one or more of several types of bus structures, including a memory bus or a memory controller, a peripheral bus, an Accelerated Graphics Port (AGP), a processor, or a local bus using any bus structure among multiple bus structures.

As a computer-readable storage medium, the memory 61 may be configured to store software programs, computer-executable programs, and modules, such as program instructions/modules corresponding to the method in the embodiments of this application. The processor 60 runs the software programs, instructions, and modules stored in the memory 61 to execute at least one of function applications and data processing of the base station, that is, to implement the method described above.

The memory 61 may include a program storage region and a data storage region. The program storage region may store an operating system and an application program required by at least one function. The data storage region may store data created depending on the use of a terminal. Additionally, the memory 61 may include a high-speed random-access memory and may also include a non-volatile memory, for example, at least one magnetic disk memory, a flash memory, or another non-volatile solid-state memory. In some examples, the memory 61 may include memories that are remotely disposed with respect to the processor 60. These remote memories may be connected to the base station via a network. Examples of the preceding network include the Internet, an intranet, a network, a communication network, and a combination thereof.

The communication interface 62 may be configured to receive and send data.

The embodiments of this application also provide a computer-readable storage medium. The computer-readable storage medium is configured to store a computer program that, when executed by a processor, implements the method provided by any one of the embodiments of this application.

A computer storage medium in the embodiment of this application may adopt any combination of one or more computer-readable media. The computer-readable medium may be a computer-readable signal medium or a computer-readable storage medium. The computer-readable storage medium may be an electrical, magnetic, optical, electromagnetic, infrared or semiconductor system, apparatus or device, or any combination thereof. The computer-readable storage medium includes (a non-exhaustive list) an electrical connection having one or more wires, a portable computer disk, a hard disk, a random access memory (RAM), a read-only memory (ROM), an electrically erasable programmable read-only memory (EPROM), a flash memory, an optical fiber, a portable compact disk read-only memory (CD-ROM), an optical memory, a magnetic memory or any suitable combination thereof. In this application, the computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. This propagated data signal may take multiple forms including an electromagnetic signal, an optical signal, or any suitable combination thereof. The computer-readable signal medium may also be any computer-readable medium other than the computer-readable storage medium. The computer-readable medium may send, propagate, or transmit a program used by or used in conjunction with an instruction execution system, apparatus, or device.

Program codes included on the computer-readable medium may be transmitted by using any suitable medium including, but not limited to, a radio medium, a wire, an optical cable, and radio frequency (RF), or any suitable combination thereof.

Computer program codes for executing the operations of the present disclosure may be written in one or more programming languages or a combination of multiple programming languages. The programming languages include object-oriented programming languages (such as Java, Smalltalk, C++, Ruby and Go) and conventional procedural programming languages (such as "C" or similar programming languages). The program codes may be executed entirely on a user computer, partly on a user computer, as a stand-alone software package, partly on a user computer and partly on a remote computer, or entirely on a remote computer or a server. In the case where the remote computer is involved, the remote computer may be connected to the user computer via any type of network (including a local area network (LAN) or a wide area network (WAN)) or may be connected to an external computer (for example, via the Internet through an Internet service provider).

It is to be understood by those skilled in the art that the term user terminal encompasses any suitable type of wireless user device, for example, a mobile phone, a portable data processing apparatus, a portable web browser, or a vehicle-mounted mobile station.

Generally speaking, various embodiments of this application may be implemented in hardware or special-purpose circuits, software, logic, or any combination thereof. For example, some aspects may be implemented in hardware while other aspects may be implemented in firmware or software executable by a controller, a microprocessor, or another computing apparatus, though this application is not limited thereto.

Embodiments of this application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, state setting data, or source or object codes written in any combination of one or more programming languages.

A block diagram of any logic flow among the drawings of this application may represent program procedures, may represent interconnected logic circuits, modules, and functions, or may represent a combination of program procedures with logic circuits, modules, and functions. Computer programs may be stored in a memory. The memory may be of any type suitable for a local technical environment and may be implemented by using any suitable data storage technology, such as a read-only memory (ROM), a random-access memory (RAM), and an optical memory apparatus and system (a digital video disc (DVD) or a compact disk (CD)). The computer-readable medium may include a non-transitory storage medium. The data processor may be of any type suitable to the local technical environment, such as a general-purpose computer, a special-purpose computer, a microprocessor, a digital signal processing (DSP), an application specific integrated circuit (ASIC), a field-programmable gate array (FPGA), and a processor based on a multi-core processor architecture.

## Claims

1. A signal monitoring method, applied to a first communication node and comprising:
determining a monitoring space; and
monitoring a wake-up signal in the monitoring space.

2. The signal monitoring method according to claim 1, wherein determining the monitoring space comprises:
determining the monitoring space based on first signaling, wherein the first signaling comprises at least one of: radio resource control (RRC) signaling or system information block (SIB) signaling.

3. The signal monitoring method according to claim 2, wherein the first signaling indicates at least one of the following information: a periodicity corresponding to the monitoring space, an offset corresponding to the monitoring space, a duration corresponding to the monitoring space, or a frequency domain position corresponding to the monitoring space.

4. The signal monitoring method according to claim 1, wherein monitoring the wake-up signal in the monitoring space comprises:
determining a first monitoring space based at least on position information, and monitoring the wake-up signal in the first monitoring space, wherein the first monitoring space comprises at least one monitoring position within the monitoring space.

5. The signal monitoring method according to claim 4, wherein the position information comprises at least one of:
an index of a radio frame/slot corresponding to the first monitoring space;
an index of a starting radio frame/slot corresponding to the first monitoring space;
an index of an ending radio frame/slot corresponding to the first monitoring space;
an index of a monitoring position corresponding to the first monitoring space;
a number of monitoring positions comprised in the first monitoring space;
an interval between monitoring positions comprised in the first monitoring space;
offset information corresponding to the first monitoring space;
a group index corresponding to the first communication node;
a total number of groups corresponding to the wake-up signal; or
a paging occasion (PO)/random access channel occasion (RO) corresponding to the first communication node.

6. The signal monitoring method according to claim 5, wherein the position information is determined by at least one of: SIB signaling, RRC signaling, or a preset value.

7. The signal monitoring method according to any one of claims 1 to 6, further comprising:
monitoring a synchronization signal in the monitoring space.

8. The signal monitoring method according to claim 1, wherein determining the monitoring space comprises at least one of:
determining the monitoring space based at least on a monitoring space index indicated by second dedicated signaling;
determining the monitoring space based at least on a first index corresponding to the first communication node; or
determining the monitoring space based at least on a predefined rule;
wherein the monitoring space is at least one monitoring space in a first monitoring space set and/or a second monitoring space set.

9. The signal monitoring method according to claim 8, wherein determining the monitoring space based at least on the monitoring space index indicated by the second dedicated signaling comprises:
determining at least one monitoring space in the first monitoring space set and/or the second monitoring space set as the monitoring space based on the monitoring space index indicated by the second dedicated signaling.

10. The signal monitoring method according to claim 8, wherein determining the monitoring space based at least on the first index corresponding to the first communication node comprises:
determining at least one monitoring space in the first monitoring space set and/or the second monitoring space set as the monitoring space based on a relationship between the first index and
the monitoring space and the first index corresponding to the first communication node.

11. The signal monitoring method according to claim 10, wherein the first index is at least one of:
a group index corresponding to the first communication node, an index of the first communication node, a cell index, or an index configured by signaling.

12. The signal monitoring method according to claim 10, wherein the relationship between the first index and the monitoring space is determined by at least one of: pre-definition or signaling configuration.

13. The signal monitoring method according to claim 8, wherein the predefined rule is that all monitoring spaces in the second monitoring space set are the monitoring space.

14. The signal monitoring method according to claim 8, wherein the first monitoring space set/ the second monitoring space set comprises at least one monitoring space.

15. The signal monitoring method according to claim 14, wherein the first monitoring space set/ the second monitoring space set is determined based on second signaling/third signaling, wherein the second signaling/the third signaling indicates at least one of the following information: a monitoring space index, a periodicity corresponding to the monitoring space, an offset corresponding to the monitoring space, a duration corresponding to the monitoring space, or a frequency domain position corresponding to the monitoring space.

16. The signal monitoring method according to claim 14, wherein the first monitoring space set/the second monitoring space set is determined based on a monitoring space set index indicated by fourth signaling and a predefined relationship between the monitoring space set index and a monitoring space set, and the monitoring space set comprises at least one monitoring space.

17. The signal monitoring method according to claim 8, further comprising:
monitoring a synchronization signal in a monitoring space of the first monitoring space set.

18. A signal sending method, applied to a second communication node and comprising:
determining a monitoring space; and
sending a wake-up signal corresponding to a first communication node in the monitoring space.

19. The signal sending method according to claim 18, wherein determining the monitoring space comprises:
determining the monitoring space based on first signaling, wherein the first signaling comprises at least one of: radio resource control (RRC) signaling or system information block (SIB) signaling.

20. The signal sending method according to claim 19, wherein the first signaling indicates at least one of the following information: a periodicity corresponding to the monitoring space, an offset corresponding to the monitoring space, a duration corresponding to the monitoring space, or a frequency domain position corresponding to the monitoring space.

21. The signal sending method according to claim 18, wherein sending the wake-up signal corresponding to the first communication node in the monitoring space comprises:
determining a first monitoring space corresponding to the first communication node based at least on position information, and sending the wake-up signal corresponding to the first communication node in the first monitoring space, wherein the first monitoring space comprises at least one monitoring position within the monitoring space.

22. The signal sending method according to claim 21, wherein the position information comprises at least one of:
an index of a radio frame/slot corresponding to the first monitoring space;
an index of a starting radio frame/slot corresponding to the first monitoring space;
an index of an ending radio frame/slot corresponding to the first monitoring space;
an index of a monitoring position corresponding to the first monitoring space;
a number of monitoring positions comprised in the first monitoring space;
an interval between monitoring positions comprised in the first monitoring space;
offset information corresponding to the first monitoring space;
a group index corresponding to the first communication node;
a total number of groups corresponding to the wake-up signal; or
a paging occasion (PO)/random access channel occasion (RO) corresponding to the first communication node.

23. The signal sending method according to claim 22, wherein the position information is determined by at least one of: SIB signaling, RRC signaling, or a preset value.

24. The signal sending method according to any one of claims 18 to 23, further comprising:
sending a synchronization signal in the monitoring space.

25. The signal sending method according to claim 18, wherein determining the monitoring space comprises at least one of:
determining at least one monitoring space in a first monitoring space set and/or a second monitoring space set as the monitoring space based at least on a monitoring space index indicated by second dedicated signaling;
determining at least one monitoring space in a first monitoring space set and/or a second monitoring space set as the monitoring space based at least on a first index corresponding to the first communication node; or
determining at least one monitoring space in a first monitoring space set and/or a second monitoring space set as the monitoring space based at least on a predefined rule.

26. The signal sending method according to claim 25, wherein determining at least one monitoring space in the first monitoring space set and/or the second monitoring space set as the monitoring space based at least on the first index corresponding to the first communication node comprises:
determining at least one monitoring space in the first monitoring space set and/or the second monitoring space set as the monitoring space based on a relationship between the first index and the monitoring space and the first index corresponding to the first communication node.

27. The signal sending method according to claim 26, wherein the first index is at least one of: a group index corresponding to the first communication node, an index corresponding to the first communication node, a cell index, or an index configured by signaling.

28. The signal sending method according to claim 26, wherein the relationship between the first index and the monitoring space is determined by at least one of: pre-definition or signaling configuration.

29. The signal sending method according to claim 25, wherein the predefined rule is that all monitoring spaces in the second monitoring space set are the monitoring space.

30. The signal sending method according to claim 25, wherein determining the monitoring space further comprises:
determining the first monitoring space set/the second monitoring space set based on second signaling/third signaling, wherein the second signaling/the third signaling indicates at least one of the following information: a monitoring space index, a periodicity corresponding to the monitoring space, an offset corresponding to the monitoring space, a duration corresponding to the monitoring space, a frequency domain position corresponding to the monitoring space.

31. The signal sending method according to claim 25, wherein determining the monitoring space further comprises:
determining the first monitoring space set/the second monitoring space set based on a monitoring space set index indicated by fourth signaling and a predefined relationship between the monitoring space set index and a monitoring space set, wherein the monitoring space set comprises at least one monitoring space.

32. The signal sending method according to claim 25, further comprising:
sending a synchronization signal in a monitoring space of the first monitoring space set.

33. A first communication node, comprising: a processor that, when executing a computer program, implements the signal monitoring method of any one of claims 1 to 17.

34. A second communication node, comprising: a processor that, when executing a computer program, implements the signal sending method of any one of claims 18 to 32.

35. A computer-readable storage medium, storing a computer program that, when executed by a processor, implements the signaling monitoring method of any one of claims 1 to 17 or implements the signaling sending method of any one of claims 18 to 32.
